# EUROPEAN PATENT SPECIFICATION

(11) **EP 2 309 837 B1**
(45) Date of publication and mention of the grant of the patent: **07.12.2011**
(21) Application number: 09740946.0
(22) Date of filing: 25.03.2009
(51) Int. Cl.: A01D 87/12

(54) **ACCESSORY FOR RECEIVING AND STORING BALES OF COMPACTED LOOSE MATERIAL**
ZUBEHÖR ZUR AUFNAHME UND LAGERUNG VON BALLEN AUS VERDICHTETEM LOSEM MATERIAL
ACCESSOIRE POUR RECEVOIR ET STOCKER DES BALLES DE MATÉRIAU EN VRAC COMPACTÉ

(30) Priority: 23.05.2008 IT MI20080968
(43) Date of publication of application: 20.04.2011
(73) Proprietor: CAEB International S.r.l., 20121 Milano (IT)
(72) Inventor: ROTA, Guido, 24010 Sorisole (BG) (IT)
(74) Representative: Simino, Massimo
(86) International application number: PCT/IB2009/005107
(87) International publication number: WO 2009/141692

(56) References cited:
- DE-A1- 1 757 530
- US-A- 3 412 884
- US-A- 4 909 698

## Description

The present invention relates to an accessory as defined in the preamble of claim 1, for receiving and storing bales of compacted loose material formed by a machine for compacting loose material into bales.

The use of machines for collecting loose material such as tree and bush prunings, hay, grass and the like is well-known in agriculture.

As a rule, loose materials are well adapted to be advantageously compacted into bales, substantially having the shape of round cylinders, for easy disposal and/or transport.

By way of example, an agricultural machine of this type is known from the prior art document WO2006/040783, which conveniently has a cylindrical compaction chamber with a horizontally extending axis. The machine further comprises means for picking up material from the ground and conveying it into said collection chamber, as well as means adapted to eject the' bale of compacted loose material from the compaction chamber.

Concerning the above machines, they have been found to ensure high efficiency and performance, as they allow collection of loose material into easy-to-handle bales.

Nevertheless, it shall be noted that the collection and compaction chamber obviously has a limited capacity wherefore, as full capacity is reached, the bale of compacted loose material must be removed before collecting any further loose material. Particularly, the ejection of bales of loose material from the compaction chamber is facilitated by special ejector means. Each bale of compacted loose material will be dropped out where the machine ejects it, which involves the need of passing again through these areas to pick up the ejected bales.

It is apparent from the above that, in the field of machines for collecting and compacting loose material into bales, typically agricultural machines, the need is strongly felt of clearing the chamber for compacting and collecting the loose material to be compacted, without randomly dropping out compacted bales and without having to move every time to a predetermined collection station.

This need has been addressed by using carriages trailed by the compacting machine, on which the bales of compacted material are at least temporarily heaped up. Concerning this particular solution, the addition of a trailed cart apparently involves an increase of the longitudinal dimension, i.e. length, which makes this solution unsuitable for use in steep soils or with small. operating spaces, e.g. in narrow row planting, when moving between contiguous rows.

DE 1757530 discloses an accessory 3 for collecting and storing bales according to the preamble of claim 1.

This invention is based on the problem of providing an accessory for receiving and storing bales of compacted loose material formed by a machine for compacting loose material into bales, which has such structural and functional characteristics as to fulfill the above need, while obviating the above prior art drawbacks.

This problem is solved by an accessory for receiving and storing bales of compacted loose material formed by a machine for compacting loose material into bales as defined in claim 1.

According to another aspect, the above problem is also solved by a machine for compacting loose material into bales as defined in claim 14.

Further features and advantages of the accessory for receiving and storing bales of compacted loose material and the machine for compacting loose material into bales according to the present invention, will be apparent upon reading of the following description of one preferred embodiment thereof, which is given by way of illustration and without limitation with reference to the accompanying figures, in which:
- Figure 1 is a perspective view of the accessory of the invention mounted to a machine for compacting loose material into bales of the invention;
- Figure 2 is a side view of the accessory and machine of Figure 1;
- Figure 3 is a partially sectional view of Figure 2 with the accessory and the machine in a different configuration, particularly the accessory having its door open and the machine having its cover open,
- Figure 4 is a perspective rear view of the accessory of Figure 1;
- Figures 4a and 4b are enlarged views of two different details of Figure 4;

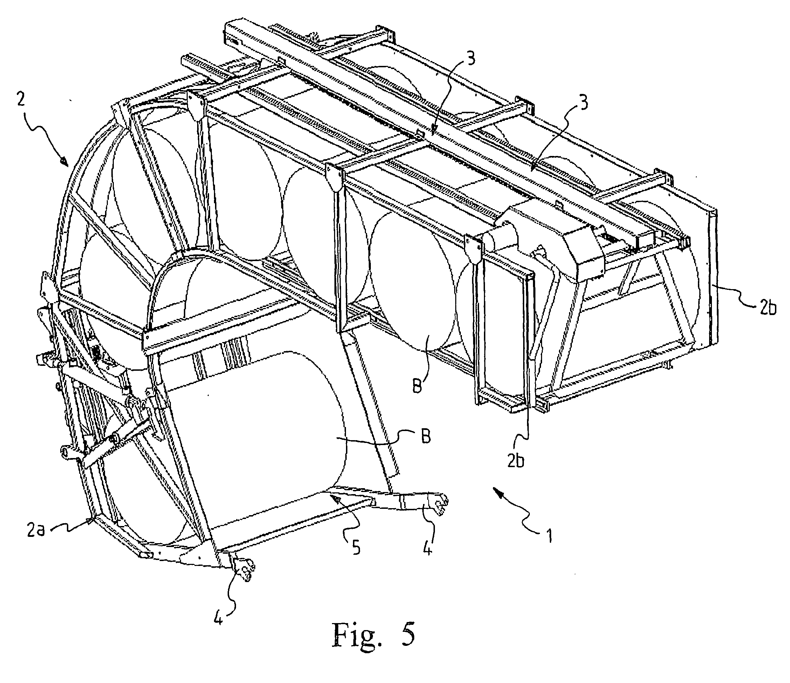

- Figure 5 is a perspective front view of the accessory of Figure 1;
- Figure 6 is a side view of the accessory of Figure 5;
- Figure 7 is a perspective view of the accessory of Figure 5, with the door of the bale drop opening in its open state;
- Figure 8 is a side view of the accessory of Figure 7;
- Figure 9 is a side view of the accessory and machine of Figure 1, with the door of the drop opening in a forward position within the accumulation channel;

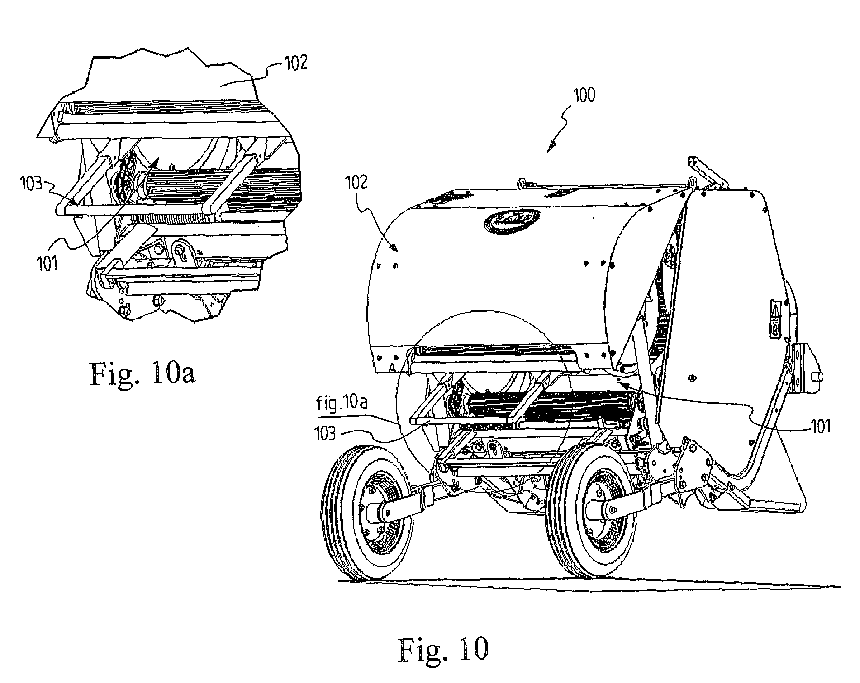

- Figure 10 is a rear perspective view of the machine of Figure 1, with the door of the compaction chamber in a partially open state and
- Figure 10a is an enlarged view of a detail of Figure 10.

Referring to the accompanying figures, numeral 1 generally designates an accessory of the invention, for receiving and storing bales B of compacted loose material formed by a machine 100 for compacting loose material into bales.

As used herein, the term "loose material" is intended to define materials such as tree and bush prunings, hay, grass and the like.

Particularly, in a wholly conventional manner, the machine 100 includes means for picking up loose material from the ground and conveying it into a collection and compaction chamber 101, as well as means for ejecting the bales B of loose material from the collection and compaction chamber 101 through a special ejection opening.

The material is typically picked up from the front part of the machine 100 as the machine is moved forward, whereas the compacted bale B is ejected 101 from the opposite rear part of the machine.

Particularly, for the bales B of compacted loose material to be ejected from the chamber 101, such chamber has an ejection opening at the rear side of the machine 100, which is defined as such with reference to the forward direction of the machine as it picks up loose material from the ground.

Collection of loose material is facilitated by the provision of a special comb, not shown, which is designed to engage the loose material on the soil and facilitate conveyance thereof to the collection and compaction chamber 101.

The machine 100 has a cover 102 for ensuring that the ejection opening of the collection chamber 101 is held closed during compaction by the machine 100.

It shall be noted that the cover 102 is supported by the machine to move from a lowered position in which it closes the ejection opening through which the bales B of loose material are ejected to a raised position in which it allows bales B to be dropped out from the collection chamber 101 and vice versa.

The machine 100 comprises actuator means, namely hydraulic actuators, which allow the cover 102 to be moved from the lowered position to the raised position and vice versa.

It shall be noted that lifting elements 103 project backwards from the rear edge of the cover 102, to push a bale B upwards. In this embodiment, the lifting elements are embodied by forks.

The details of the machine 100 will not be further described herein as a description of such machine is contained in the international patent application WO2006/040783.

It shall be noted that, for simplicity, the machine 100 is only shown in some of the figures, with the other figures showing the accessory 1 and possibly the bales B contained therein.

The accessory 1 for receiving and storing bales B of compacted loose material formed by the machine 100 has a frame 2 for containing and supporting the bales B of compacted loose material, which are ejected through said ejection opening of the collection and compaction chamber 101 of the machine 100.

The frame 2 is equipped with fixing means 4, through which the accessory 1 may be firmly but removably secured to the machine 100.

Particularly, as shown in the figures, the accessory 1 is mounted onto the machine 100 at the rear of the machine 100, i.e. the part with the ejection opening through which the bales B are ejected from the collection and compaction chamber 101. As a result, the accessory 1 is carried by the machine 100 and requires no ground-supported rolling means. In any case, whenever this is needed, the accessory 1 may be equipped with ground-supported means, or the accessory may not be mounted directly onto the machine 100 but supported thereby.

The frame 2 defines an accumulation chamber, that is designed to hold and guide the bales B of lose material that come out of the machine 100. Such accumulation channel extends from an entry end 2a through which the bales B are introduced to a distal end 2b. In practice, such accumulation channel acts as a magazine designed to receive a plurality of bales B of compacted loose material (in the illustrated embodiment up to seven bales), and prevent them from being dropped off along the collection path upon ejection from the collection chamber 101 of the machine 100.

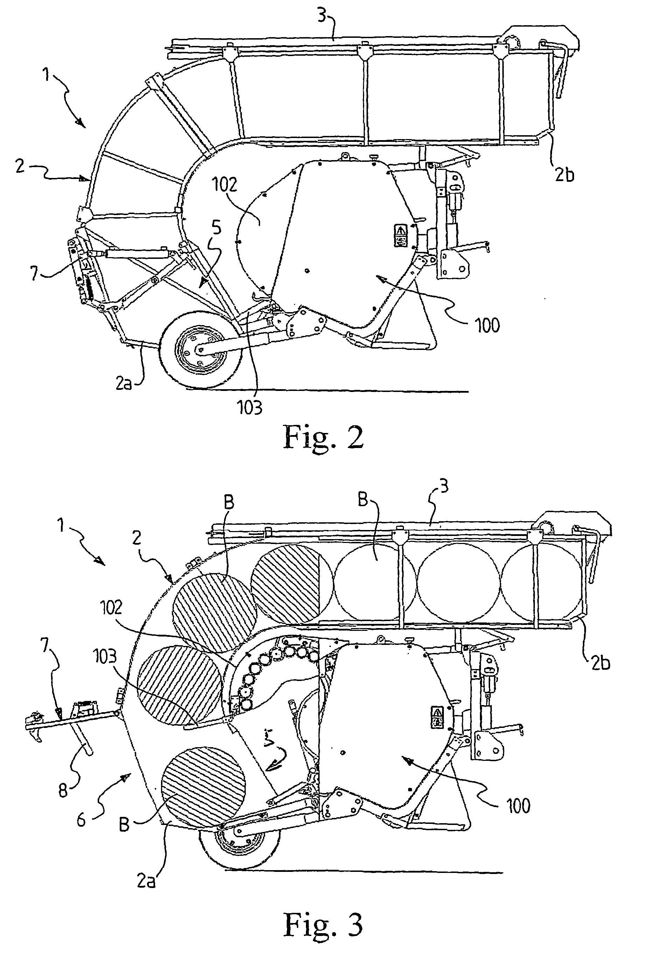

At the entry end 2a of the frame 2, the front side may be defined as the side facing towards the machine 100 (see Fig. 2).

The frame 2 has a load opening 5 for loading the bales B of compacted loose material, which is situated at said front side of the entry end 2a.

In order to prevent the accessory 1 from undesirably increasing the length and height of the machine 100, the above mentioned accumulation channel for the bales B, formed by the frame 2, has at least one section defining a curved accumulation channel, in which a plurality of bales B of compacted loose material may be received in a corresponding curvilinear arrangement.

As shown in the figures, which relate to a condition in which the accessory 1 is fixed to the machine 100 for compacting loose material into bales B, the above mentioned curvilinear section extends in height, so that the entry end 2a of the frame 2 is below the level of the distal end 2b.

Preferably, such curvilinear section of accumulation channel coincides with the initial section of the accumulation channel, i.e. the frame 2, extending from the entry end 2a through which the bales B are introduced.

Furthermore, the provision of such curvilinear section allows the accumulation channel for the bales B to advantageously extend beyond the front side of the entry end 2a of the frame 2, so that the distal end 2b of the accumulation channel and the frame is more advanced in position than the entry end 2a, as shown.

As a result of the above conformation, after the first curvilinear section, the frame 2 and the accumulation channel defined thereby advantageously extend above the machine 100 and even farther than the front end of the machine. This advantageously minimizes the length of the machine 100 without excessively increasing its height.

According to the preferred embodiment as shown in the figures, said first curvilinear section of the accumulation channel for the bales B is connected to a second horizontal rectilinear section which constitutes its natural continuation, to the distal end. Due to this conformation that includes a first curvilinear section and a second horizontal rectilinear section, the accumulation channel for the bales B is an accumulation channel that assumes a J shape in its longitudinal section, with the entry end 2a and the distal end 2b placed at the foot end and the head end of the J stem.

Concerning the frame 2 that forms the accumulation channel, it is found to be formed of profiled or tubular elements and to have a substantially rectangular cross section which remains substantially constant throughout its longitudinal extension. Particularly, the accumulation channel is delimited by two opposed vertical sides connected by opposed upper and lower base surfaces.

Concerning the cross section of the accumulation channel, it is of such a size as to accommodate the bales B of compacted loose material with some clearance, which size depends on the dimensions (width and diameter) of the collection and compaction chamber of the machine 100. By way of illustration, these bales have a round cylindrical shape with a diameter of about 40 cm and a width of 60 cm.

The bales B of compacted loose material are advantageously received into the accumulation channel with their axis of rotation extending from one side to the other, i.e. transversely to the accumulation channel.

Advantageously, the accessory 1 comprises motion impacting means associated with the frame 2, for moving the bales B contained in the accumulation channel.

In accordance with a preferred embodiment, such motion imparting means comprise drive belt members 3 which arc adapted to exert an adhesion and friction action on the bales B of loose material in the accumulation channel, to cause displacement thereof towards the distal end 2b or in the opposite direction towards the entry end 2a.

Namely, the drive belt members 3 are actuated by a hydraulic motor which is supplied with the hydraulic fluid of the tractor that pulls the machine 100 and are disposed along at least one side of the accumulation channel to drive the bales B contacted thereby. These drive belt members 3 include an adjustable friction device which is designed to enable or disable the belt driving feature in response to particular conditions, to prevent the structure from being excessively stressed whenever excessive forces are exerted thereupon or the bales B reach their limit stop position within the accumulation channel.

Preferably, the above mentioned motion imparting means are situated close to the distal end 2b of the frame 2. More precisely, they are situated at the center line of the upper base of the frame 2 and extend throughout said second horizontal rectilinear section of the frame 2.

It shall be noted that, in addition to the load opening 5, the frame 2 also has a discharge opening 6 through which the bales B of compacted loose material may be dropped out from the accumulation channel.

A door 7 is associated with the discharge opening 6, and is supported in a movable fashion, to move from a closed position, in which it closes the discharge opening 6 and prevents the bales B from coming out of the accumulation channel, to an open position, in which said door 7 does not engage the discharge and the bales B can come out of the accumulation channel defined by the frame 2.

Preferably, the door 7 is moved from the closed position to the open position and vice versa by rotating the door 7 towards the exterior of the frame 2. For this purpose, the door 7 is hinged at one side to the frame 2.

The accessory 1 comprises second actuator means for driving the door 7 and causing it to move from the closed position to the open position and vice versa.

Also, the accessory 1 comprises stop means 8, which are supported by the frame 2 substantially at said discharge opening 6 in a movable fashion, to reversibly move:
- from an operating position in which they project into the accumulation channel to divide it into an upstream portion, delimited by the stop means 8 and the distal end 2b, and a downstream portion delimited by the stop means 8 and the entry end 2a, and prevent the bales B from moving from the upstream portion to the downstream portion of the accumulation channel, to
- an offset position, in which the stop means 8 do not prevent the bales B from moving from the upstream portion to the downstream portion of the accumulation channel.

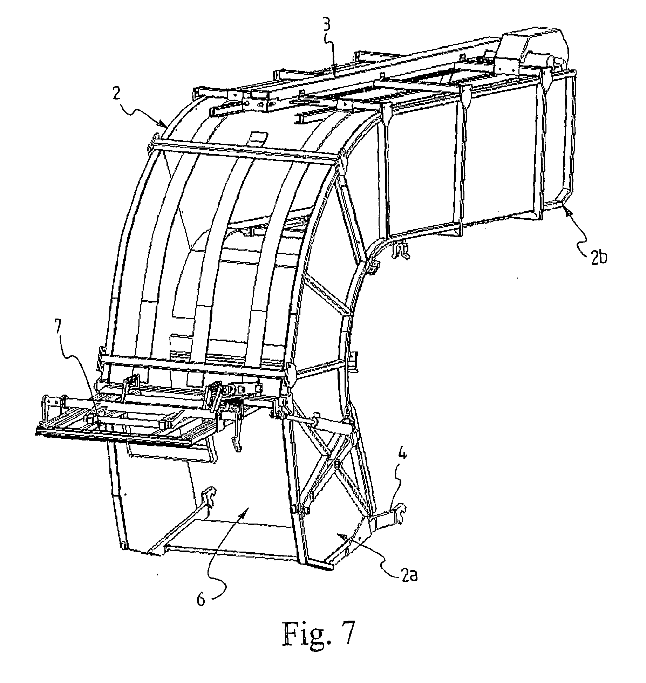

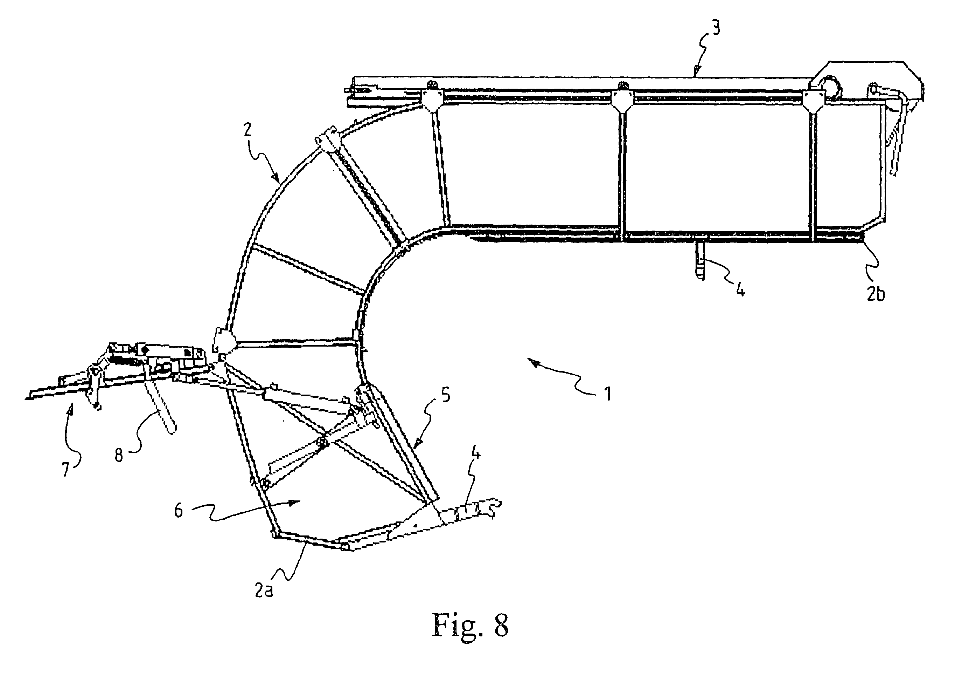

Advantageously, the stop means 8 are supported by the door 7 to follow its motion from the closed position to the open position. Accordingly, when the door 7 is rotated out of the accumulation channel into said open position (see Figures 3, 7 and 8), the stop means are in a position in which they do not interfere with the motion of the bales B from the upstream portion to the downstream portion of the accumulation channel.

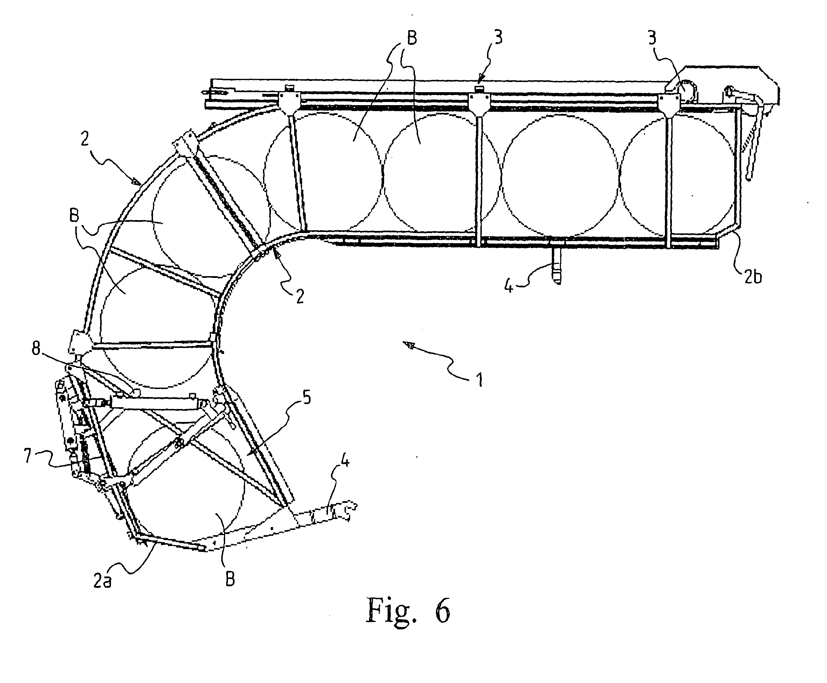

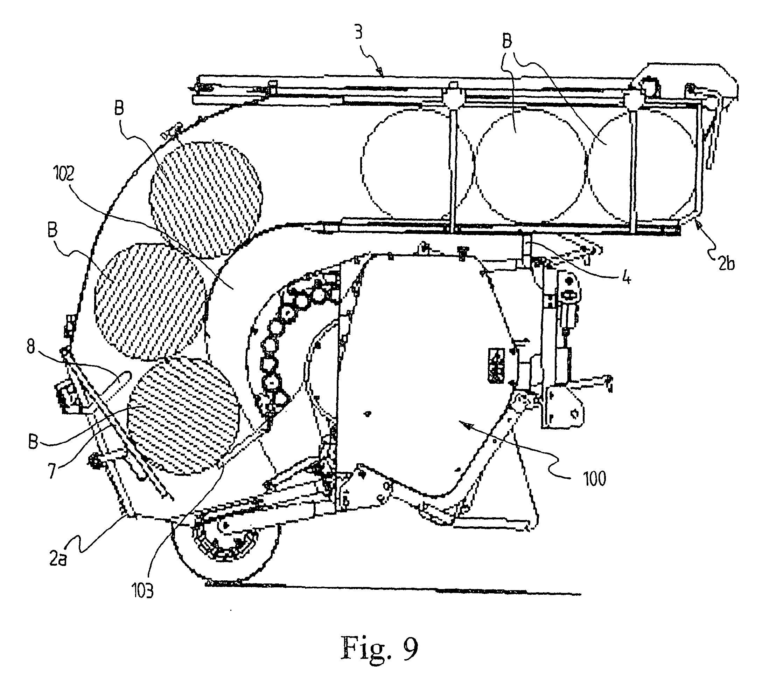

Conversely, when the door 7 is in said closed position, the stop means 8 are within the accumulation channel. It shall be understood that:
- the stop means 8 are supported by the door 7 to rotate between two limit stop positions, defined by said operating position and said offset position and also
- when the stop means 8 are in said operating position (see Figures 6 and 9), they operate within the accumulation channel as unidirectional stop means to only prevent the bales (B) from moving from the upstream portion to the downstream portion of the accumulation channel. The structure of the stop means 8 and their possibility of rotating from the operating position and the offset position and vice versa is such that:
- the motion of a bale B from the downstream portion to the upstream portion of the accumulation channel causes said stop means 8 to rotate into the offset position, whereas
- the motion of a bale B from the upstream portion to the downstream portion of the accumulation channel causes said stop means 8 to rotate in the opposite direction, and to stick into the operating position, to prevent the bale B from being dropped down.

At the entry end 2a, the frame 2 has:
- pushing means for pushing the bale B at the entry end of the accumulation channel towards the load opening 5 and
- first actuator means for actuating said pushing means.

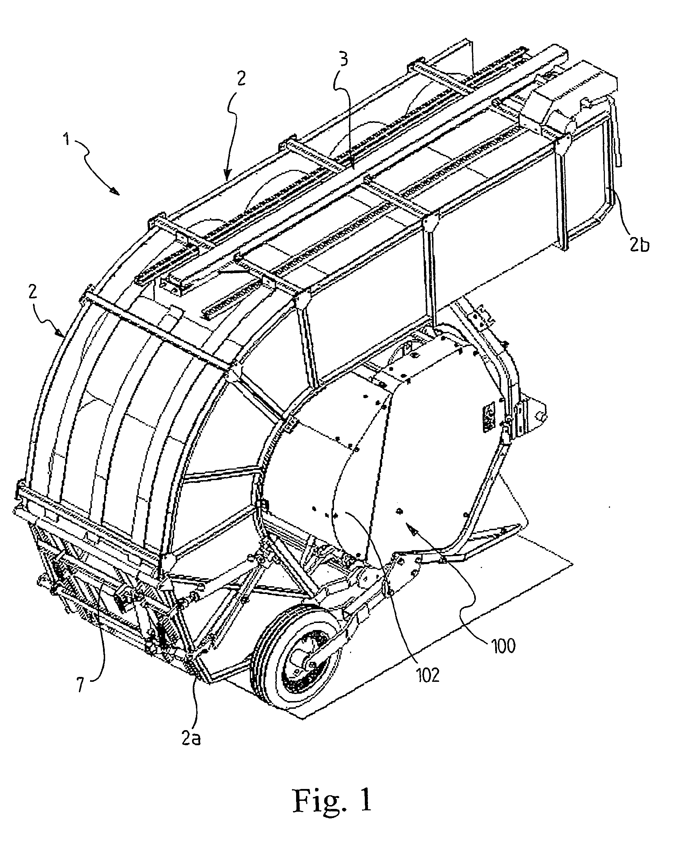

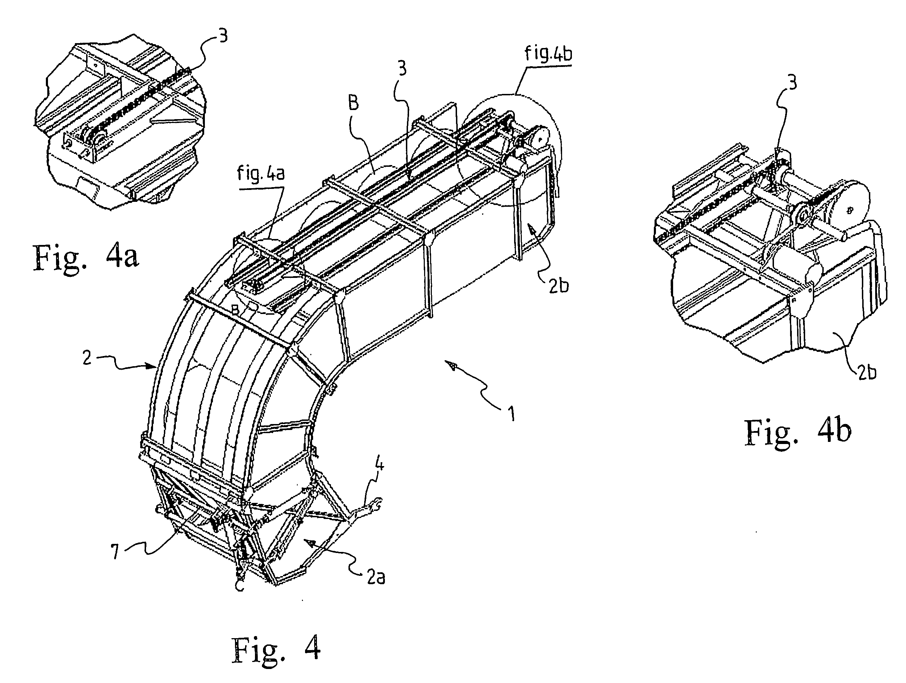

The discharge opening 6 for the bales B is situated in a position that substantially faces towards and is opposed to the entry opening 5 and the door 7 is adapted to be actuated by said second actuator means to move from said closed position (see Figures 1,2, 4 and 6) in which it closes the discharge opening 6 to a more advanced position within said accumulation channel (see Fig. 9). In view of the above, the pushing means are defined by the door itself, due to the ability of the door to move into the accumulation channel to push the approaching bale B towards the load opening 5.

Otherwise, special pushing means may be provided.

The accessory of the invention may include lifting means, for lifting a bale of compacted loose material in the accumulation channel from the entry end to a position beyond said stop means 8.

Nevertheless, according to the preferred embodiment, the accessory has no such lifting means, because the action of lifting the bales B from the entry end 2a of the accumulation channel and causing them to surpass said stop means 8 is conveniently assured by the presence of the lifting elements 103 which advantageously project into the accumulation channel through the load opening 5.

Particularly, as the cover 102 is opened by being moved from the lowered position (see Figure 2) to the raised position (see Fig. 3), the lifting means 103 will engage from below any bale B of compacted loose material that may be situated at the entry end 2a of the accumulation channel, thereby causing it to be lifted along the accumulation channel. The presence of the lifting elements 103 allows the bale B to be initially lifted in the first section of the accumulation channel, and then be moved beyond the stop means 8.

It shall be noted that, as the cover is opened, the bale B to be lifted is prevented from coming off said lifting elements 103, e.g. conformed as forks, by having the door 7 move into said more advanced position into the accumulation channel (see Fig. 9). In other words, the door 7 or any other pushing means shall be caused to push the bale B to be lifted towards the load opening 5, thereby maintaining it in the right position above the lifting forks 103, at least during the initial lifting step.

Conversely, as the cover 102 is lowered, in order to avoid any interference between the lifting elements 103 and any bale B at the entry end 2a of the accumulation channel, which has been ejected from the collection and compaction chamber 101, the door 7 shall be caused to move into said closed position (see Figures 1, 2, 4 and 6) or be slightly open, to allow the bale B to move back from the load opening 5 and allow the lifting elements 103 to come down with the cover 102.

According to a preferred embodiment, the above described actuator means are hydraulic cylinders supplied by the hydraulic circuit of the machine 100.

As clearly shown in the above description, the accessory of the present invention fulfills the above mentioned need and also obviates the prior art drawbacks as set out in the introduction of this disclosure.

As the bales B are ejected from the collection chamber 101 of the machine 100, they are received in the accumulation channel of the accessory 1, and are thus collected and stored therein. Also, due to the circular shape of the accumulation channel, and the possibility of forming such accumulation channel so that it can extend beyond the baler that compacts loose material into bales, the overall length dimension may be minimized, without involving an excessive height increase.

An advantage of the accessory of the invention consists in the simplicity of the structural solution in use, which ensures proper operation thereof without requiring high maintenance costs.

A further advantage of the accessory of the invention is that, when moving from one row of plants to another, in small spaces, the length of the machine is not excessively increased by the presence of the accessory, thanks to the curved extension thereof.

Those skilled in the art will obviously appreciate that a number of changes and variants may be made to the accessory as described hereinbefore, without departure from the scope of the invention, as defined in the following claims.

Thus, for example, a discharge opening for the bales B may be also provided next to the distal end of the accumulation channel.

Also, if a lower capacity of accumulation of bales of compacted loose material is required, the frame may be arranged to only include the first curvilinear section, without any additional horizontal rectilinear section.

## Claims

1. An accessory (1) for collecting and storing bales (B) of compacted loose material formed by a machine for compacting loose material into bales (B), wherein said accessory (1) comprises a frame (2) for containing and supporting bales (B) of compacted loose material, wherein:
- said frame (2) having fixing means (4) for fixing said accessory (1) to a machine (100) for compacting loose material into bales (B),
- said frame (2) comprising an entry end (2a) for introduction of the bales (B) of compacted loose material, in which a front side is designed to face towards the machine (100) for compacting loose material into bales (B),
- said frame (2) extending from said entry end (2a) for introduction of the bales (B) towards a distal end (2b) to define an accumulation channel in which the bales (B) of compacted loose material are contained and guided,
- said entry end (2a) of said frame (2) is situated at a lower level than said distal end (2b), when said accessory (1) is fixed to a machine (100) for compacting loose material into bales (B), said entry end (2a) of said frame (2) having a front side designed to face towards said machine (100) for compacting loose material into bales (B)
- said accumulation channel for the bales (B) forms, for at least a first section, a curvilinear accumulation channel in which it receives a plurality of bales (B) in a corresponding curvilinear arrangement,
- said frame (2) has a load opening (5) for loading the bales (B) which is situated at the front side of said entry end (2a) of the frame (2,
- said frame (2) comprises a discharge opening (6) for the bales (B) of compacted loose material,
**characterized in that**:
- said discharge opening (6) for the bales (B) is situated in a position that substantially faces towards and is opposed to said load opening (5) for the bales (B),
- a door (7) is associated with said discharge opening (6) in a movable manner from a position in which said door (7) closes said discharge opening (6) to an open position, in which said door (7) allows the bales (B) to come out from said accumulation channel and
- second actuator means being provided for actuating said door (7) from said closed position to said open position and vice versa.

2. An accessory (1) as claimed in claim 1, wherein at said entry end (2a) said frame (2) has:
- pushing means for pushing a bale (B) at the entry end (2a) of said accumulation channel towards said load opening (5) and
- first actuator means for actuating said pushing means,
wherein said door (7) is actuated by said second actuator means to move from said closed position in which said door (7) closes said discharge opening (6) to an advanced position within said accumulation channel, said door (7) operating as said pushing means as it moves from said closed position to said advanced position within said accumulation channel.

3. An accessory (I) as claimed in claim 1 or 2, wherein said first curvilinear section of said accumulation channel for the bales (B) is situated close to said entry end (2) for introduction of the bales (B).

4. An accessory (1) as claimed in claim 1, 2 or 3, wherein:
- said accumulation channel for the bales (B) extends beyond said front side of the entry end (2a), said distal end (2b) being thereby more advanced in position than said entry end (2a) for introduction of the bales, with reference to the forward direction of the machine whereto said accessory (1) is designed to be fixed, as the machine picks up loose material for compacting it into bales (B).

5. An accessory (1) as claimed in any claim from 1 to 4, wherein said first curvilinear section of said accumulation channel for the bales (B) is connected to a second rectilinear section of said accumulation channel situated close to said distal end (2b).

6. An accessory (1) as claimed in any claims from 1 to 5, wherein:
- said accumulation channel for the bales (B) defines a J-shaped accumulation channel and
- said entry end (2a) and said distal end (2b) are situated at the foot end and at the stem end of said J-shaped channel.

7. An accessory (1) as claimed in any claim from 1 to 6, comprising motion imparting means (3) associated with said frame (2), for moving the bales (B) contained in said accumulation channel.

8. An accessory (1) as claimed in claim 7, wherein said motion imparting means (3) include drive belt members which are adapted to exert an adhesion and friction action on the bales (B) of loose material in said accumulation channel, to cause displacement of said bales (B) towards/away from said distal end (2b).

9. An accessory (1) as claimed in claim 4 and in claim 7 or 8, wherein said motion imparting means (3) are situated at said second rectilinear section of said accumulation channel.

10. An accessory (1) as claimed in claim 1, comprising stop means (8) associated with said frame (2) substantially at said discharge opening (6), said stop means (8) being reversibly movable:
- from an operating position in which they project into said accumulation channel to divide it into an upstream portion, delimited by said stop means (8) and said distal end (2b), and a downstream portion, delimited by said stop means (8) and said entry end (2a), and prevent said bales (B) from moving from said upstream portion to said downstream portion of said accumulation channel,
- to an offset position, in which they do not prevent said bales (B) from moving from the upstream portion to the downstream portion of said accumulation channel.

11. An accessory (1) as claimed in claim 10, wherein said stop means (8) are supported by said door (7).

12. An accessory (1) as claimed in claim 10 o 11, wherein:
- said stop means (8) are supported to rotate between two limit stop positions, defined by said operating position and said offset position and
- said stop means (8) operate within said accumulation channel as unidirectional stop means (8) to prevent the bales (B) from moving only from the upstream portion to the downstream portion of said accumulation channel, the motion of a bale (B) from the downstream portion to the upstream portion of the accumulation channel causing said stop means (8) to rotate into said offset position.

13. An accessory (1) as claimed in any claim from 10 to 12, comprising lifting means for lifting a bale (B) of compacted loose material in said accumulation channel from said entry end (2a) to a position beyond said stop means (8).

14. A machine for compacting loose material into bales (B), comprising a collection and compaction chamber (101) for compacting loose material picked up from the ground into bales (B) and means for ejecting the bales (B) of compacted loose material, wherein said collection chamber (101) has an opening for ejection of the bales (B) of compacted loose material, situated at its rear side, which is defined as such with reference to the forward direction of the machine (100) as it picks up loose material from the ground, **characterized in that** it comprises an accessory (1) as claimed un any claim from 1 to 13, removably fixed at its rear side, for discharging the bales (B) extracted from said collection chamber (101) into said entry opening of the accessory (1).

15. A machine as claimed in claim 14, comprising a cover (102) associated in its closed position to said collection chamber (101), wherein:
- said cover (102) is movable from a lowered position in which it closes the ejection opening for the bales (B) of loose material to a raised position and vice versa,
- lifting elements (103) protecting backwards from the rear edge of said cover, said lifting elements (103) projecting from within said accumulation channel through said load opening (5) for the bales (B), to lift the bales (B) within said accumulation channel from said entry end (2a).

## Patentansprüche

1. Zubehöreinrichtung (1) zum Sammeln und Speichern von Ballen (B) aus verdichtetem losen Material, die von einer Maschine zum Verdichten von losem Material zu Ballen (B) gebildet werden, wobei diese Zubehöreinrichtung (1) einen Rahmen (2) zum Enthalten und Tragen von Ballen (B) aus verdichtetem losen Material umfasst, wobei:
- dieser Rahmen (2) Befestigungsmittel (4) zum Befestigen dieser Zubehöreinrichtung (1) an der Maschine (100) zum Verdichten von losem Material zu Ballen (B) aufweist,
- dieser Rahmen (2) ein Eintrittsende (2a) zum Einführen der Ballen (B) aus verdichtetem losen Material umfasst, wobei eine Vorderseite so gestaltet ist, dass sie der Maschine (100) zum Verdichten von losem Material zu Ballen (B) zugewandt ist,
- sich dieser Rahmen (2) vom Eintrittsende (2a) zum Einführen der Ballen (B) zu einem distalen Ende (2b) hin erstreckt, um einen Speicherkanal zu definieren, in dem die Ballen (B) aus verdichtetem losen Material enthalten sind und geführt werden,
- sich dieses Eintrittsende (2a) dieses Rahmens (2) auf einer geringeren Höhe als das distale Ende (2b) befindet, wenn die Zubehöreinrichtung (1) an einer Maschine (100) zum Verdichten von losem Material zu Ballen (B) befestigt ist, wobei das Eintrittsende (2a) des Rahmens (2) eine Vorderseite aufweist, die so gestaltet ist, dass sie der Maschine (100) zum Verdichten von losem Material zu Ballen (B) zugewandt ist,
- der Speicherkanal für die Ballen (B) auf mindestens einem ersten Abschnitt einen gekrümmten Speicherkanal bildet, in dem er eine Vielzahl von Ballen (B) mit einer entsprechenden gekrümmten Anordnung aufnimmt,
- dieser Rahmen (2) eine Ladeöffnung (5) zum Laden der Ballen (B) aufweist, die sich auf der Vorderseite des Eintrittsendes (2a) des Rahmens (2) befindet,
- dieser Rahmen (2) eine Entladeöffnung (6) für die Ballen (B) aus verdichtetem losen Material umfasst,
**dadurch gekennzeichnet, dass**:
- sich diese Entladeöffnung (6) für die Ballen (B) in einer Position befindet, die im Wesentlichen der Ladeöffnung (5) für die Ballen (B) zugewandt ist und ihr gegenüber liegt,
- eine Klappe (7) mit der Entladeöffnung (6) so verbunden ist, dass sie aus einer Stellung, in der diese Klappe (7) die Entladeöffnung (6) verschließt, in eine geöffnete Stellung bewegt werden kann, wobei diese Klappe (7) den Ballen (B) das Austreten aus dem Speicherkanal ermöglicht, und
- zweite Aktuatormittel zum Bewegen der Klappe (7) aus der geschlossenen Stellung in die geöffnete Stellung und umgekehrt vorgesehen sind.

2. Zubehöreinrichtung (1) nach Anspruch 1, bei welcher der Rahmen (2) am Eintrittsende (2a) Folgendes aufweist:
- Schiebemittel zum Schieben eines Ballens (B) am Eintrittsende (2a) des Speicherkanals zur Ladeöffnung (5) und
- erste Aktuatormittel zum Betätigen der Schiebemittel,
wobei die Klappe (7) durch die zweiten Aktuatormittel betätigt wird, um sich aus der geschlossenen Stellung, in der die Klappe (7) die Entladeöffnung (6) verschließt, in eine vorgerückte Stellung innerhalb des Speicherkanals zu bewegen, wobei die Klappe (7) als das besagte Schiebemittel wirkt, wenn sie sich aus der geschlossenen Stellung in diese vorgerückte Stellung innerhalb des Speicherkanals bewegt.

3. Zubehöreinrichtung (1) nach Anspruch 1 oder 2, bei welcher der erste gekrümmte Abschnitt des Speicherkanals für die Ballen (B) nahe dem Eintrittsende (2) zum Einführen der Ballen (B) angeordnet ist.

4. Zubehöreinrichtung (1) nach Anspruch 1, 2 oder 3, bei der:
- sich der Speicherkanal für die Ballen (B) über die Vorderseite des Eintrittsendes (2a) hinaus erstreckt, wobei sich dadurch das distale Ende (2b) in einer weiter vorgerückten Stellung als das Eintrittsende (2a) zum Einführen der Ballen bezogen auf die Vorwärtsrichtung der Maschine, an der befestigt zu werden die Zubehöreinrichtung (1) bestimmt ist, befindet, wenn die Maschine loses Material aufsammelt, um es zu Ballen (B) zu verdichten.

5. Zubehöreinrichtung (1) nach einem der Ansprüche von 1 bis 4, bei welcher der erste gekrümmte Abschnitt des Speicherkanals für die Ballen (B) mit einem zweiten geraden Abschnitt des Speicherkanals verbunden ist, der sich nahe dem distalen Ende (2b) befindet.

6. Zubehöreinrichtung (1) nach einem der Ansprüche von 1 bis 5, bei der:
- der Speicherkanal für die Ballen (B) einen J-förmigen Speicherkanal definiert, und
- sich das Eintrittsende (2a) und das distale Ende (2b) am Schweifende und am Schaftende dieses J-förmigen Kanals befinden.

7. Zubehöreinrichtung (1) nach einem der Ansprüche von 1 bis 6, die mit dem Rahmen (2) verbundene Bewegung erteilende Mittel (3) zum Bewegen der im Speicherkanal enthaltenen Ballen (B) umfasst.

8. Zubehöreinrichtung (1) nach Anspruch 7, bei der die Bewegung erteilenden Mittel (3) Antriebsriemenelemente umfassen, die geeignet sind, eine Adhäsions- und Friktionswirkung auf die Ballen (B) aus losem Material in dem Speicherkanal auszuüben, um die Verschiebung der (B) hin zum beziehungsweise weg vom distalen Ende (2b) zu bewirken.

9. Zubehöreinrichtung (1) nach Anspruch 4 und Anspruch 7 oder 8, bei der die Bewegung erteilenden Mittel (3) im zweiten geraden Abschnitt des Speicherkanals angeordnet sind.

10. Zubehöreinrichtung (1) nach Anspruch 1, die Anschlagmittel (8) umfasst, die im Wesentlichen bei der Entladeöffnung (6) mit dem Rahmen (2) verbunden sind, wobei diese Anschlagmittel (8) wie folgt reversibel beweglich sind:
- aus einer Arbeitsstellung, in der sie in den Speicherkanal hineinragen, um ihn in einen stromaufwärts gelegenen Teil, der durch die Anschlagmittel (8) und das distale Ende (2b) begrenzt wird, und einen stromabwärts gelegenen Teil, der durch die Anschlagmittel (8) und das Eintrittsende (2a) begrenzt wird, zu unterteilen und zu verhindern, dass sich die Ballen (B) vom stromaufwärts gelegenen Teil zum stromabwärts gelegenen Teil des Speicherkanals bewegen,
- in eine versetzte Stellung, in der sie die Ballen (B) nicht daran hindern, sich vom stromaufwärts gelegenen Teil zum stromabwärts gelegenen Teil des Speicherkanals zu bewegen.

11. Zubehöreinrichtung (1) nach Anspruch 10, bei der die Anschlagmittel (8) von der Klappe (7) getragen werden.

12. Zubehöreinrichtung (1) nach Anspruch 10 oder 11, bei der:
- die Anschlagmittel (8) so gelagert sind, dass sie sich zwischen zwei Grenzanschlagstellungen drehen, die durch die Arbeitsstellung und die versetzte Stellung definiert sind, und
- die Anschlagmittel (8) im Speicherkanal als in eine Richtung wirkende Anschlagmittel (8) arbeiten, um die Ballen (B) nur daran zu hindern, sich vom stromaufwärts gelegenen Teil zum stromabwärts gelegenen Teil des Speicherkanals zu bewegen, wobei die Bewegung eines Ballens (B) vom stromabwärts gelegenen Teil zum stromaufwärts gelegenen Teil des Speicherkanals bewirkt, dass sich die Anschlagmittel (8) in die versetzte Stellung drehen.

13. Zubehöreinrichtung (1) nach einem der Ansprüche von 10 bis 12, die Hubmittel zum Heben eines Ballens (B) aus verdichtetem losen Material im Speicherkanal vom Eintrittsende (2a) in eine Position jenseits der Anschlagmittel (8) umfasst.

14. Maschine zum Verdichten von losem Material zu Ballen (B), die eine Sammel- und Verdichtungskammer (101) zum Verdichten von vom Boden aufgesammeltem losem Material zu Ballen (B) und Mittel zum Ausstoßen der Ballen (B) aus verdichtetem losen Material umfasst, wobei diese Sammelkammer (101) eine Öffnung zum Ausstoßen der Ballen (B) aus verdichtetem losen Material aufweist, die sich auf ihrer Rückseite befindet, die als solche bezogen auf die Vorwärtsrichtung der Maschine (100), wenn sie loses Material vom Boden aufsammelt, definiert ist, **dadurch gekennzeichnet, dass** sie eine Zubehöreinrichtung (1) nach einem der Ansprüche von 1 bis 13 umfasst, die lösbar auf ihrer Rückseite befestigt ist, um die der Sammelkammer (101) entnommenen Ballen (B) in die Eintrittsöffnung der Zubehöreinrichtung (1) zu entladen.

15. Maschine nach Anspruch 14, die eine Abdeckung (102) umfasst, die in ihrer geschlossenen Stellung mit der Sammelkammer (101) verbunden ist, wobei:
- diese Abdeckung (102) aus einer abgesenkten Stellung, in der sie die Ausstoßöffnung für die Ballen (B) aus losem Material verschließt, in eine angehobene Stellung und umgekehrt bewegt werden kann,
- Hubelemente (103) nach hinten von der Rückseite der Abdeckung vorstehen, wobei diese Hubelemente (103) von innerhalb des Speicherkanals durch die Ladeöffnung (5) für die Ballen (B) herausragen, um die Ballen (B) im Speicherkanal vom Eintrittsende (2a) anzuheben.

## Revendications

1. Accessoire (1) pour collecter et stocker des balles (B) de matériau en vrac compacté formé par une machine pour compacter un matériau en vrac en balles (B), où ledit accessoire (1) comprend un châssis (2) pour contenir et soutenir des balles (B) de matériau en vrac compacté, où :
- ledit châssis (2) a des moyens de fixation (4) pour fixer ledit accessoire (1) à une machine (100) pour compacter un matériau en vrac en balles (B),
- ledit châssis (2) comprend une extrémité d'entrée (2a) pour l'introduction des balles (B) de matériau en vrac compacté, dans laquelle un côté avant est conçu pour être orienté vers la machine (100) pour compacter un matériau en vrac en balles (B),
- ledit châssis (2) s'étire de ladite extrémité d'entrée (2a) pour l'introduction des balles (B) vers une extrémité distale (2b) pour définir un canal d'accumulation dans lequel les balles (B) de matériau en vrac compacté sont contenues et guidées,
- ladite extrémité d'entrée (2a) dudit châssis (2) est située à un niveau inférieur à ladite extrémité distale (2b), lorsque ledit accessoire (1) est fixé à une machine (100) pour compacter un matériau en vrac en balles (B), ladite extrémité d'entrée (2a) dudit châssis (2) ayant un côté avant conçu pour être orienté vers ladite machine (100) pour compacter un matériau en vrac en balles (B)
- ledit canal d'accumulation pour les balles (B) forme, pour au moins une première section, un canal d'accumulation curvilinéaire dans lequel il reçoit une pluralité de balles (B) dans une disposition curvilinéaire correspondante,
- ledit châssis (2) a une ouverture de chargement (5) pour charger les balles (B) qui est située sur le côté avant de ladite extrémité d'entrée (2a) du châssis (2),
- ledit châssis (2) comprend une ouverture d'évacuation (6) pour les balles (B) de matériau en vrac compacté, **caractérisé en ce que**:
- ladite ouverture d'évacuation (6) pour les balles (B) est située dans une position qui est substantiellement orientée vers et est opposée à ladite ouverture de chargement (5) pour les balles (B),
- une porte (7) est associée à ladite ouverture d'évacuation (6) de manière mobile à partir d'une position dans laquelle ladite porte (7) ferme ladite ouverture d'évacuation (6) vers une position ouverte, dans laquelle ladite porte (7) permet aux balles (B) de sortir dudit canal d'accumulation et
- des seconds moyens d'actionnement étant prévus pour actionner ladite porte (7) à partir de ladite position fermée vers ladite position ouverte et vice versa.

2. Accessoire (1) tel que revendiqué dans la revendication 1, où à ladite extrémité d'entrée (2a) ledit châssis (2) a:
- des moyens de poussée pour pousser une balle (B) à l'extrémité d'entrée (2a) dudit canal d'accumulation vers ladite ouverture de chargement (5) et
- des premiers moyens d'actionnement pour actionner lesdits moyens de poussée,
où ladite porte (7) est actionnée par lesdits seconds moyens d'actionnement pour se déplacer à partir de ladite position fermée dans laquelle ladite porte (7) ferme ladite ouverture d'évacuation (6) vers une position avancée au sein dudit canal d'accumulation, ladite porte (7) fonctionnant comme lesdits moyens de poussée tandis qu'elle se déplace à partir de ladite position fermée vers ladite position avancée au sein dudit canal d'accumulation.

3. Accessoire (1) tel que revendiqué dans la revendication 1 ou 2, où ladite première section curvilinéaire dudit canal d'accumulation pour les balles (B) est située près de ladite extrémité d'entrée (2) pour l'introduction des balles (B).

4. Accessoire (1) tel que revendiqué dans la revendication 1, 2 ou 3, où :
- ledit canal d'accumulation pour les balles (B) s'étire au-delà dudit côté avant de l'extrémité d'entrée (2a), ladite extrémité distale (2b) étant ainsi en position plus avancée que ladite extrémité d'entrée (2a) pour l'introduction des balles, en référence à la direction avant de la machine où ledit accessoire (1) est conçu pour être fixé, tandis que la machine ramasse le matériau en vrac pour le compacter en balles (B).

5. Accessoire (1) tel que revendiqué dans une quelconque revendication de 1 à 4, où ladite première section curvilinéaire dudit canal d'accumulation pour les balles (B) est reliée à une seconde section rectiligne dudit canal d'accumulation située près de ladite extrémité distale (2b).

6. Accessoire (1) tel que revendiqué dans de quelconques revendications de 1 à 5, où :
- ledit canal d'accumulation pour les balles (B) définit un canal d'accumulation en forme de J et
- ladite extrémité d'entrée (2a) et ladite extrémité distale (2b) sont situées à l'extrémité du pied et à l'extrémité de la tige dudit canal en forme de J.

7. Accessoire (1) tel que revendiqué dans une quelconque revendication de 1 à 6, comprenant des moyens générateurs de mouvement (3) associés audit châssis (2), pour déplacer les balles (B) contenues dans ledit canal d'accumulation.

8. Accessoire (1) tel que revendiqué dans la revendication 7, où lesdits moyens générateurs de mouvement (3) incluent des éléments à courroie d'entraînement qui sont adaptés pour exercer une action d'adhérence et de friction sur les balles (B) de matériau en vrac dans ledit canal d'accumulation, pour provoquer le déplacement desdites balles (B) vers/loin de ladite extrémité distale (2b).

9. Accessoire (1) tel que revendiqué dans la revendication 4 et dans la revendication 7 ou 8, où lesdits moyens générateurs de mouvement (3) sont situés à ladite seconde section rectiligne dudit canal d'accumulation.

10. Accessoire (1) tel que revendiqué dans la revendication 1, comprenant des moyens d'arrêt (8) associés audit châssis (2) substantiellement à ladite ouverture d'évacuation (6), lesdits moyens d'arrêt (8) étant mobiles de manière réversible:
- à partir d'une position opérationnelle dans laquelle ils s'avancent dans ledit canal d'accumulation pour le diviser en une partie amont, délimitée par lesdits moyens d'arrêt (8) et ladite extrémité distale (2b), et une partie aval, délimitée par lesdits moyens d'arrêt (8) et ladite extrémité d'entrée (2a), et empêchent que lesdites balles (B) ne se déplacent de ladite partie amont vers ladite partie aval dudit canal d'accumulation,
- vers une position décalée, dans laquelle ils n'empêchent pas que lesdites balles (B) se déplacent de ladite partie amont vers ladite partie aval dudit canal d'accumulation.

11. Accessoire (1) tel que revendiqué dans la revendication 10, où lesdits moyens d'arrêt (8) sont soutenus par ladite porte (7).

12. Accessoire (1) tel que revendiqué dans la revendication 10 ou 11, où :
- lesdits moyens d'arrêt (8) sont soutenus pour pivoter entre deux positions de butée, définies par ladite position opérationnelle et ladite position décalée et
- lesdits moyens d'arrêt (8) opèrent au sein dudit canal d'accumulation comme moyens d'arrêt unidirectionnels (8) pour empêcher que les balles (B) ne se déplacent uniquement de la partie amont vers la partie aval dudit canal d'accumulation, le mouvement d'une balle (B) de la partie aval vers la partie amont du canal d'accumulation faisant en sorte que les moyens d'arrêt (8) pivotent dans ladite position décalée.

13. Accessoire (1) tel que revendiqué dans une quelconque revendication de 10 à 12, comprenant des moyens de levage pour soulever une balle (B) de matériau en vrac compacté dans ledit canal d'accumulation de ladite extrémité d'entrée (2a) vers une position au-delà desdits moyens d'arrêt (8).

14. Machine pour compacter un matériau en vrac en balles (B), comprenant une chambre de collecte et de compactage (101) pour compacter le matériau en vrac ramassé au sol en balles (B) et des moyens pour expulser les balles (B) de matériau en vrac compacté, où ladite chambre de collecte (101) a une ouverture pour l'expulsion des balles (B) de matériau en vrac compacté, située sur son côté arrière, qui est défini en tant que tel par la direction avant de la machine (100) tandis qu'elle ramasse le matériau en vrac au sol, **caractérisée en ce qu'**elle comprend un accessoire (1) tel que revendiqué dans une quelconque revendication de 1 à 13, fixé de manière amovible sur son côté arrière, pour évacuer les balles (B) extraites de ladite chambre de collecte (101) dans ladite ouverture d'entrée de l'accessoire (1).

15. Machine telle que revendiquée à la revendication 14, comprenant un couvercle (102) associé dans sa position fermée à ladite chambre de collecte (101), où :
- ledit couvercle (102) est mobile à partir d'une position abaissée dans laquelle il ferme l'ouverture d'expulsion pour les balles (B) de matériau en vrac vers une position surélevée et vice versa,
- des éléments de levage (103) s'avançant vers l'arrière à partir du bord arrière dudit couvercle, lesdits éléments de levage (103) s'avançant à partir de l'intérieur dudit canal d'accumulation à travers ladite ouverture de chargement (5) pour les balles (B), pour soulever les balles (B) au sein dudit canal d'accumulation à partir de ladite extrémité d'entrée (2a).
